# EUROPEAN PATENT APPLICATION

(11) **EP 0 746 978 A1**
(43) Date of publication of application: **11.12.1996**
(21) Application number: 96201552.5
(22) Date of filing: 04.06.1996
(51) Int. Cl.: A01M 7/00

(54) **Method and apparatus for supplying a spraying liquid to spray heads**

(30) Priority: 06.06.1995 NL 1000501
(71) Applicant: Greenland Nieuw-Vennep B.V., NL-2153 LR Nieuw-Vennep (NL)
(72) Inventor: Beijaard, Martinus Johannes, 1566 NE Assendelft (NL)
(74) Representative: Hoorweg, Petrus Nicolaas

(57) **Abstract**

A method for supplying one or more spraying members of an agricultural sprayer with a spraying liquid such as a solution of a pesticide or nutrient in water or with a flushing liquid, starting from a quantity of this liquid which is pumped under pressure to one or more spraying members, wherein, taking into account the dimensions of the or each liquid conduit stored in a computer unit, such as passage and length, in addition to the volume flow generated by the pump, the time is calculated that is required for a liquid part to flow from a predetermined point in the transport path to the spraying member in order to fill the conduit system as far as the or each spraying member with either the one or the other liquid, whereby is achieved that the correct dosage is already sprayed on the crop from the beginning of the operation of the field spray.

## Description

The invention relates to a method for supplying one or more spraying members of an agricultural sprayer with a spraying liquid such as a solution of a pesticide or nutrient in water or with a flushing liquid, starting from a quantity of this liquid which is pumped under pressure to one or more spraying members.

Such a method is applied inter alia during field spraying for spraying pesticides in the full field arable farming/bulb-growing and vegetable-growing sectors, wherein a spray boom construction is used which is provided with spray heads placed at regular mutual distance. This spray head ensures that the liquid flow is broken into small droplets with a good distribution in the width direction of the spray boom. The spray boom is usually divided into a plurality of spraying sections, whereby it is possible to close off a portion of the spray boom width.

Spraying of the liquid takes place by means of pumping this liquid from a supply to the spray heads. The problem which occurs here is that residual liquid is present in the supply tank and the conduits, this usually being solved by replacing the residual liquid with a flushing liquid. For this purpose a number of valves must be closed manually as soon as the spray heads of one or more sections begin to spray flushing liquid. This operation is laborious and requires quite a lot of time, wherein the operative runs the risk of coming into contact with the spraying liquid.

The invention has for its object to obviate the above stated drawbacks and provides to this end a method which is distinguished in that, taking into account the dimensions of the or each liquid conduit stored in a computer unit, such as passage and length, in addition to the volume flow generated by the pump, the time is calculated that is required for a liquid part to flow from a predetermined point in the transport path to the spraying member in order to fill the conduit system as far as the or each spraying member with either the one or the other liquid.

Due to the accurate time measurement the operative only has to start the pump, whereafter the system itself measures when the spraying liquid has arrived at the or each spraying member, whereafter the actual spraying can begin. Thus is achieved that the correct dosage is already sprayed on the crop from the beginning of the operation of the field sprayer. If the conduits of the system were filled beforehand with clean water, then this clean water is all pressed out of the conduits.

According to a further development of the method according to the invention the desired volume flow of the spraying liquid can be calculated on the basis of the cultivated area in hectares which is to be sprayed, whereafter the pressure and/or flow speed of the spraying liquid are set. Thus is achieved that at the end of the spraying operation of the field sprayer the supply of spraying liquid is fully consumed. No residual liquids thereby remain in the conduit system. The flushing operation can then be started using clean water until the whole conduit system is filled without flushing water flowing away.

The invention further relates to an apparatus for performing the above stated method, which apparatus is provided with a frame with spray boom, a liquid tank for the spraying liquid, a pump connected to the outlet thereof and one or more spraying members on the spray boom which are connected to the pump via one or more liquid conduits.

This apparatus is distinguished in that one or more valves controlled by the computer unit are arranged in the pressure line for the spraying liquid.

In preference a pressure regulator controlled by the computer unit is arranged behind the pump for precise adjustment of the pressure in the liquid conduits.

Finally, it is recommended to arrange a clean water tank adjacently of the tank for the spraying liquid, the connection of which to the pump is likewise controlled by the computer unit.

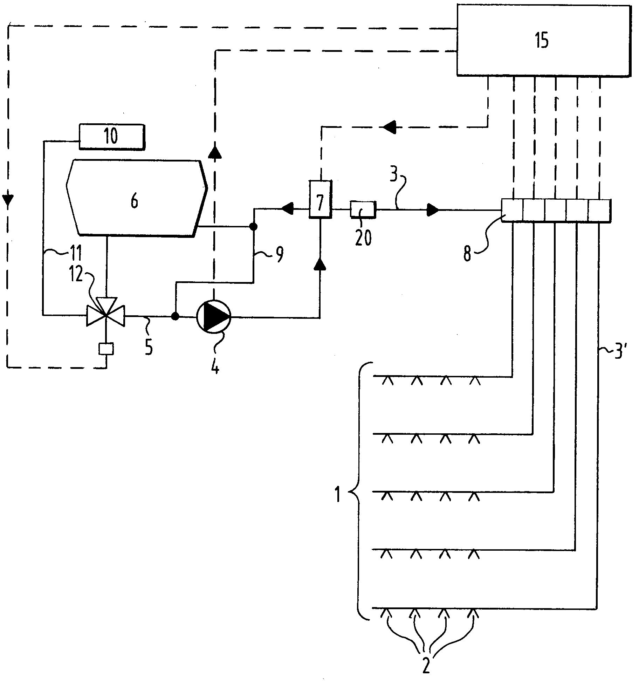

The invention is further elucidated hereinbelow in the figure description of an embodiment. This embodiment is shown schematically in the annexed figure.

Designated in the figure with the numeral 1 is the spray boom which is sub-divided into five sections, wherein each section is provided with spraying members, for instance spray heads 2. The section is connected to a collective pressure line 3 which leads to a pump 4. Pump 4 is supplied from a supply tank 6 for spraying liquid via the suction line 5. A pressure regulator 7 is accommodated in pressure line 3, wherein a valve block 8 with a valve arranged for each section is arranged behind the pressure regulator. The suction line 5 is connected to pressure regulator 7 via a return conduit 9. In the figure is also arranged a clean water tank 10 which is connected to suction line 5 by a second suction line 11 via a three-way valve 12.

The apparatus is provided according to the invention with a computer unit 15 which is provided with a number of parameters, for instance the diameter of the conduits 3 and section conduits 3', suction line 5 and return conduit 9 in addition to data entered by the operative, for instance the surface area of the acreage for spraying. The system is further supplied by pump 4, wherein the pressure regulator 7 and flow-pressure gauge 20 assume determined settings under the influence of the computer unit 15.

Computer unit 15 controls the pressure regulator 7 in pressure line 3, the valves in valve block 8 as well as the three-way valve 12 in the conduit from the clean water tank 10.

The pressure and/or flow control/setting is controlled using the computer unit. The pressure and/or flow will be adjusted depending on the desired quantity of litres/hectares for spraying. Since the liquid conduit system is built up of the suction line 5, pressure line 3 and return conduit 9, the content thereof is constant. The number of litres can be determined subject to the diameter and length of the different conduits. By adding these quantities together it is known how long it takes (time) at a determined liquid flow (litres per hectare setting) for the liquid to flow from for instance point X (outlet of the pump) in the conduit system to point Y (spray head). Since the length of the pressure line 3' of a section behind the valve in block 8 is known, account can also easily be taken of the greater distance between pump and heads with long conduit 3' as opposed to short conduit.

The computer unit can be embodied with a separate flushing function. After the start signal by the operative the system will be started by computer unit 15 and the flushing command carried out. After starting it is calculated how long it takes for the clean water or spraying liquid to pass from the beginning to the section or head. Once this time has elapsed the section valve or head will close automatically. After a period of time all section valves or heads are closed and the flushing procedure is terminated.

The invention is not limited to the above described embodiment.

## Claims

1. Method for supplying one or more spraying members of an agricultural sprayer with a spraying liquid such as a solution of a pesticide or nutrient in water or with a flushing liquid, starting from a quantity of this liquid which is pumped under pressure to one or more spraying members, **characterized in that,** taking into account the dimensions of the or each liquid conduit stored in a computer unit, such as passage and length, in addition to the volume flow generated by the pump, the time is calculated that is required for a liquid part to flow from a predetermined point in the transport path to the spraying member, in order to fill the conduit system as far as the or each spraying member with either the one or the other liquid.

2. Method as claimed in claim , **characterized in that** the desired volume flow of the spraying liquid is calculated on the basis of the cultivated area in hectares which is to be sprayed, whereafter the pressure and the flow speed of the spraying liquid are set.

3. Apparatus for performing the method as claimed in claim 1, provided with a frame with spray boom, a liquid tank for the spraying liquid, a pump connected to the outlet thereof and one or more spraying members on the spray boom which are connected to the pump via one or more liquid conduits, **characterized in that** one or more valves controlled by the computer unit are arranged in the pressure line for the spraying liquid.

4. Apparatus as claimed in claim 3, **characterized in that** a pressure regulator controlled by the computer unit is arranged in the liquid conduit behind the pump.

5. Apparatus as claimed in claim 3 or 4, **characterized in that** a second tank for the flushing liquid is arranged adjacently of the tank for the spraying liquid, which second tank is connected to the pump via a valve controlled by the computer unit.
